# EUROPÄISCHE PATENTSCHRIFT

(11) **EP 1 754 910 B1**
(45) Veröffentlichungstag und Bekanntmachung des Hinweises auf die Patenterteilung: **14.11.2007**
(21) Anmeldenummer: 06014630.5
(22) Anmeldetag: 14.07.2006
(51) Int. Cl.: F16F 9/512

(54) **Schwingungsdämpfer mit amplitudenabhängiger Dämpfung**
Vibration damper with amplitude-dependent damping
Amortisseur de vibrations avec amortissement dépendant de l'amplitude

(30) Priorität: 17.08.2005 DE 102005038797
(43) Veröffentlichungstag der Anmeldung: 21.02.2007
(73) Patentinhaber: ThyssenKrupp Bilstein Suspension GmbH, 58256 Ennepetal (DE)
(72) Erfinder: Krefeld, Andreas, Dipl.-Ing., 40227 Düsseldorf (DE)
(74) Vertreter: Adams, Steffen

(56) Entgegenhaltungen:
- DE-A1- 10 351 353

## Beschreibung

Die Erfindung betrifft einen Schwingungsdämpfer mit amplitudenabhängiger Dämpfung für Kraftfahrzeuge gemäß dem Oberbegriff des Patentanspruchs 1.

Ein derartiger Schwingungsdämpfer ist aus der DE 103 51 353 A1 bekannt. Bei diesem bekannten Schwingungsdämpfer weist die Einrichtung zur amplitudenabhängigen Dämpfung einen Trennkolben auf, der durch einen Aluminiumträgerring gebildet ist, in den ein Elastomerelement als Anschlagpuffer festhaftend auf- bzw. einvulkanisiert ist. Das Elastomerelement ragt an beiden Seiten über den Aluminiumträgerring hinaus, um den Trennkolben im Bereich der Endlagen seiner Hubbewegung zu verzögern und die Aufprallbeschleunigungen zu reduzieren. Durch das während des Betriebes des Stoßdämpfers erfolgende andauernde Aufsetzen und Abheben des Trennkolbens ist das Elastomerelement stark beansprucht, sodass es eine nur begrenzte Lebensdauer aufweist. Eine weitere Schwierigkeit in Bezug auf diesen bekannten Trennkolben ist darin zu sehen, dass die bei Kraftfahrzeugstoßdämpfern eingesetzten Dämpfungsflüssigkeiten/Hydrauliköle das Elastomerelement stark altern lassen und dessen Lebensdauer so zusätzlich verkürzen. Hinsichtlich der Materialauswahl für das Elastomerelement ist der Konstrukteur somit deutlich eingeschränkt.

Der Erfindung liegt die Aufgabe zugrunde, einen Schwingungsdämpfer gemäß dem Oberbegriff des Patentanspruchs 1 derart weiterzubilden, dass eine Verzögerung des Hubes des Trennkolbens in den Endlagen des Trennkolbenhubes und eine geräuscharme Abpufferung des Trennkolbenhubes erreicht wird, ohne dass die zur Abbremsung und Abpufferung des Trennkolbens benötigten Bauteile einem Verschleiß und damit einer Lebensdauerbegrenzung unterworfen sind.

Erfindungsgemäß wird diese Aufgabe gelöst durch einen Schwingungsdämpfer mit den Merkmalen des Patentanspruchs 1. Vorteilhafte Weiterbildungen sind in den Unteransprüchen beschrieben.

Bei der Erfindung wird die abstoßende Wirkung gleichartiger magnetischer Pole von Permanentmagneten zur Abbremsung/Verzögerung des Trennkolbens in den Endlagen des Trennkolbenhubes ausgenutzt. Die Kräfte für eine Dämpfung bzw. Abpufferung des Trennkolbens in den Endlagen seiner Bewegung wird erfindungsgemäß also über die Magnetkräfte von Permanentmagneten aufgebracht.

Die Permanentmagnete werden dabei so zueinander platziert, dass sich immer gleiche Pole gegenüber stehen. Dadurch werden in Abhängigkeit vom Hub des Trennkolbens Abstoßungskräfte erzeugt, die mit kleiner werdendem Spalt zwischen Trennkolben und den Stirnflächen des Ausgleichsraumes immer größer werden. Dadurch wird die Bewegung des Kolbens abgebremst und Beschleunigungsspitzen beim Aufsetzen des Trennkolbens werden minimiert.

Bei der erfindungsgemäßen Lösung kommt es nur in äußerst eingeschränktem Umfang zu einem Verschleiß, da die Abbremsung und Abpufferung des Trennkolbens in seinen Endlagen nicht durch mechanischen Kontakt eines elastischen Pufferelementes mit den Stirnflächen des Ausgleichsraumes erreicht wird, sondern durch die Magnetkräfte von Permanentmagneten. Aufgrund der extrem hohen Magnetkräfte arbeitet die erfindungsgemäße Einrichtung zur amplitudenselektiven Dämpfung bei kleinen Luftspalten zwischen den einander zugewandten gleichen Magnetpolen der Permanentmagnete sehr verschleißarm. Besonders beim Einsatz von Permanentmagneten aus Seltenerdewerkstoffen, die extrem hohe magnetische Feldstärken bei kleinsten Abmaßen aufweisen, treten extrem hohe Magnetkräfte auf, die im Rahmen der Erfindung vorteilhaft genutzt werden können. Aufgrund des völligen Verzichts auf Elastomerwerkstoffe ist die erfindungsgemäße Einrichtung äußerst unempfindlich gegenüber Alterungseinflüssen durch die verwendeten Dämpfungsflüssigkeiten/Hydrauliköle.

Grundsätzlich ist es denkbar, dass der Trennkolben mehrere Permanentmagnete aufweist. So könnte z.B. jede Trennkolbenoberfläche, die jeweils einer Stirnseite des Ausgleichsraumes zugewandt ist, einen separaten Permanentmagneten aufweisen. Es wäre sogar denkbar, auf jeder Trennkolbenoberfläche mehrere Permanentmagneten anzuordnen. In einem bevorzugten Ausführungsbeispiel weist der Trennkolben jedoch nur einen einzigen Permanentmagneten auf, dessen unterschiedliche magnetische Pole in axialer Richtung voneinander beabstandet angeordnet sind, wobei der eine magnetische Pol der Stirnfläche des ersten Teilraumes des Ausgleichsraumes zugeordnet ist und der andere magnetische Pol dem zweiten Teilraum des Ausgleichsraumes zugeordnet ist.

In jedem Endbereich des Ausgleichsraumes können ebenfalls mehrere Permanentmagnete angeordnet sein. In einer bevorzugten Ausführungsform ist jedoch auch in den jeweiligen Endbereichen des Ausgleichsraumes ein einziger Permanentmagnet angeordnet. Wichtig ist, dass die in den Endbereichen des Ausgleichsraumes angeordneten Permanentmagnete so angeordnet sind, dass der magnetische Pol, der dem jeweiligen Teilraum des Ausgleichsraums zugeordnet ist, dieselbe Polung aufweist wie der dem entsprechenden Teilraum zugewandte magnetische Pol des Permanentmagneten des Trennkolbens.

Um den oder die Permanentmagneten des Trennkolbens magnetisch von der Innenwandung des Ausgleichsraumes zu entkoppeln, ist ein amagnetisches Isolationselement zwischen der Innenwandung des Ausgleichsraumes und dem oder den Permanentmagneten vorgesehen. Das Isolationselement kann z.B. aus Aluminium oder aus Kunststoff bestehen, auch Keramik oder andere amagnetische Werkstoffe können für das Isolationselement verwendet werden.

Vorteilhaft ist der Ausgleichsraum in einem Hohlraum der Kolbenstange angeordnet. Auf diese Weise wird kein zusätzlicher Bauraum für den Ausgleichsraum benötigt und eine platzsparende Bauweise des Schwingungsdämpfers ermöglicht.

Vorteilhaft weist jede den Ausgleichsraum begrenzende Stirnfläche des Hohlraumes mindestens eine Ausnehmung auf, in die der mindestens eine Permanentmagnet eingesetzt ist, der jeweils mit dem Permanentmagneten des Trennkolbens zusammenwirkt. Wie bereits vorstehend erwähnt, ist es ausreichend und daher auch bevorzugt, nur einen einzigen Permanentmagneten in den Endbereichen des Ausgleichsraumes anzuordnen. Dabei sind die einzelnen Permanentmagnete in die entsprechenden Ausnehmungen der Stirnflächen des Ausgleichsraumes eingepresst, sodass sie mittels Presssitz in der Kolbenstange gehalten sind.

Die hydraulische Verbindung zwischen dem kolbenstangenfernen Arbeitsraum und dem zweiten Teilraum des Ausgleichsraumes ist vorteilhaft durch eine einfache Bohrung durch die Kolbenstange einerseits und den dem zweiten Teilraum zugewandten Permanentmagneten andererseits durchdringende Bohrung ausgebildet. Für den Fall, dass die Kolbenstange einen Kolbenstangenzapfen aufweist, auf dem der Dämpfungskolben des Schwingungsdämpfers montiert ist, verläuft diese Bohrung auch durch diesen Kolbenstangenzapfen.

Die hydraulische Verbindung zwischen dem kolbenstangenseitigen Arbeitsraum und dem ersten Teilraum des Ausgleichsraumes ist durch eine radiale Bohrung in der Kolbenstange ausgebildet. Diese radiale Bohrung entfaltet eine Drosselwirkung, wenn sie von der Dämpfungsflüssigkeit durchströmt wird. Auf diese Weise entfaltet die Einrichtung zur amplitudenabhängigen Dämpfung ihre Dämpfungswirkung.

In einer bevorzugten Ausführungsform weist der Trennkolben einen einzigen Permanentmagneten auf, der von einem hülsenförmig ausgebildeten Isolationselement umgeben ist. Dieses Isolationselement kann z.B. durch eine Aluminiumhülse oder eine Kunststoffhülse gebildet sein, sodass der den eigentlichen Kolbenkörper bildende Permanentmagnet magnetisch entkoppelt ist von der Innenwandung des Ausgleichsraumes.

Um zu vermeiden, dass sich die einander zugewandten Oberflächen der Permanentmagnete des Trennkolbens einerseits und der in den Endbereichen des Ausgleichsraumes angeordneten Permanentmagneten andererseits in den Endlagen des Trennkolbenhubes berühren bzw. aufeinander prallen und somit Beschädigungen entstehen, weist die den Permanentmagneten des Trennkolbens umgebende Hülse in axialer Richtung an beiden Enden des Trennkolbens einen den Permanentmagneten überragenden Abschnitt auf, sodass die überragenden Abschnitte der Hülse als Anschläge gegenüber den Stirnflächen des Ausgleichsraumes wirken. Die Ausbildung derartiger Anschläge für den Trennkolben ist insbesondere deswegen erforderlich, weil die Permanentmagnete aus sehr harten Werkstoffen auf keramischer Basis bestehen, die entsprechend spröde sind und bei schlagartiger mechanischer Belastung schnell beschädigt werden.

Damit die beiden Teilräume des Ausgleichsraumes voneinander hydraulisch abgetrennt sind, weist die den Permanentmagneten des Trennkolbens umgebende Hülse an ihrem Außenumfang eine Nut zur Aufnahme einer Dichtung auf. Diese Dichtung liegt dann dichtend an der Innenwandung des Ausgleichsraumes an, sodass die jeweiligen Teilräume des Ausgleichsraumes durch den Trennkolben voneinander hydraulisch abgetrennt sind.

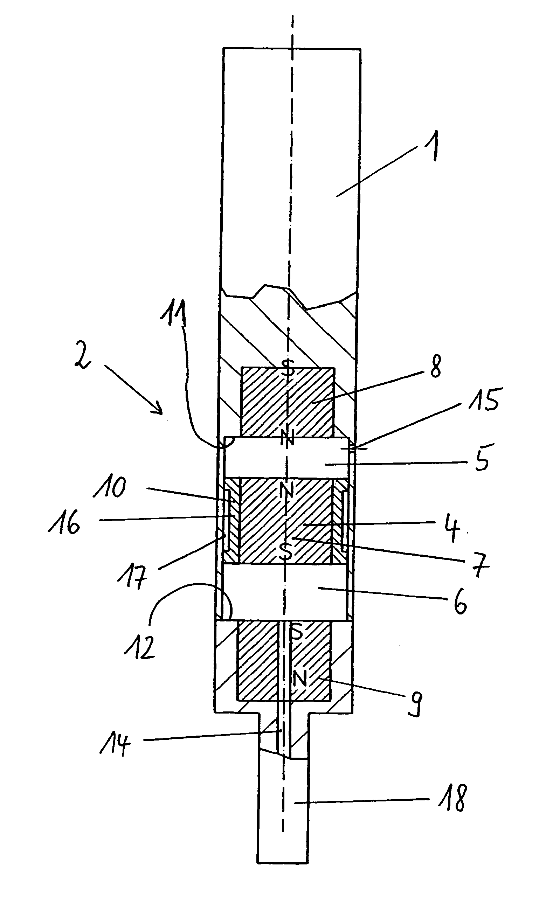

Im Folgenden wird die Erfindung anhand einer ein Ausführungsbeispiel darstellenden Zeichnung näher erläutert. Die einzige Figur zeigt eine Kolbenstange 1 mit einer erfindungsgemäßen Einrichtung zur amplitudenabhängigen Dämpfung im axialen Halbschnitt.

Die in der einzigen Figur dargestellte Kolbenstange 1 weist einen Kolbenstangenzapfen 18 auf, auf dem ein in der Figur nicht dargestellter Dämpfungskolben montiert werden kann. Die Kolbenstange 1 ist mit dem daran befestigten Dämpfungskolben in einem nicht dargestellten Schwingungsdämpferrohr in axialer Richtung oszillierend bewegbar. Der Dämpfungskolben unterteilt den Innenraum des nicht dargestellten Dämpferrohres in einen kolbenstangenseitigen und einen kolbenstangenfernen Arbeitsraum.

Zusätzlich zu dem nicht dargestellten Dämpfungskolben umfasst die Kolbenstange 1 eine weitere, zweite Dämpfungseinrichtung 2. Diese Dämpfungseinrichtung 2 umfasst einen Ausgleichsraum, der durch einen Hohlraum in der Kolbenstange 1 gebildet ist. In dem Ausgleichsraum ist ein Trennkolben 4 angeordnet, der axial verschiebbar in dem Ausgleichsraum geführt ist. Der Trennkolben 4 unterteilt den Ausgleichsraum in einen ersten Teilraum 5 und einen zweiten Teilraum 6. Die beiden Teilräume 5, 6 sind durch eine in die Nut 17 der Hülse 16 des Trennkolbens 4 eingelegte Dichtung gegeneinander abgedichtet.

Der eigentliche Kolbenkörper des Trennkolbens 4 wird durch einen Permanentmagneten 7 gebildet, der zwei gegensätzliche, in axialer Richtung voneinander beabstandete magnetische Pole N, S aufweist. Der magnetische Pol N ist der Nordpol des Permanentmagneten, und der magnetische Pol S ist der Südpol des Permanentmagneten.

Der Nordpol des Permanentmagneten 7 ist dem ersten Teilraum 5 zugewandt, während der Südpol des Permanentmagneten 7 dem zweiten Teilraum 6 zugewandt ist. In axialer Richtung ist der Ausgleichsraum durch Stirnflächen 11, 12 begrenzt. In die Oberflächen der Stirnflächen 11, 12 sind Ausnehmungen eingebracht, in welche Permanentmagnete 8, 9 eingepresst sind, sodass die Permanentmagnete 8, 9 in den Ausnehmungen der Stirnflächen 11, 12 mittels Presssitz gehalten sind.

Der dem ersten Teilraum 5 zugeordnete Permanentmagnet ist so angeordnet, dass sein Nordpol dem Trennkolben 4 zugewandt ist, während sein Südpol vom Trennkolben wegweisend ausgerichtet ist. Ebenso ist der dem Teilraum 6 zugeordnete Permanentmagnet 9 so angeordnet, dass sein Südpol dem Trennkolben 4 zugewandt ist und sein Nordpol dem Kolbenstangenzapfen 18 zugewandt ist. Auf diese Weise wird erreicht, dass jeweils gleiche magnetische Pole der Permanentmagneten 7, 8, 9 einander zugeordnet sind, sodass sich die abstoßende Wirkung gleicher magnetischer Pole in den Endlagen der Hubbewegung des Trennkolbens 4 einstellen kann. Mit zunehmender Verringerung des Abstandes des Trennkolbens 4 von den Stirnflächen 11, 12 steigen die den Trennkolben abbremsenden und abpuffernden magnetischen Kräfte an.

Wenn sich der Trennkolben 4 axial in dem Ausgleichsraum bewegt, so fließt Dämpfungsflüssigkeit entweder aus dem Teilraum 5 in den kolbenstangenseitigen Arbeitsraum hinein oder es fließt Dämpfungsflüssigkeit aus dem kolbenstangenseitigen Arbeitsraum in den Teilraum 5 hinein. Gleichzeitig fließt entweder Dämpfungsflüssigkeit aus dem kolbenstangenfernen Arbeitsraum durch die Bohrung 14 in den Teilraum 6 hinein oder es fließt Dämpfungsflüssigkeit aus dem Teilraum 6 durch die Bohrung 14 in den kolbenstangenfernen Arbeitsraum. In jedem Fall entfaltet die Bohrung 15 eine drosselnde Wirkung, wodurch die Dämpfungseinrichtung 2 ihre Dämpfungswirkung entfaltet.

Die voranstehend beschriebene amplitudenabhängige Dämpfungseinrichtung ist speziell zur Dämpfung von Schwingungen zwischen Kolbenstange und Dämpferrohr mit kleiner Amplitude ausgelegt. Insbesondere ist sie zur Dämpfung von höher- und hochfrequenten Schwingungen zwischen Kolbenstange und Dämpferrohr mit kleiner Amplitude ausgelegt.

Die den Permanentmagneten 7 des Trennkolbens 4 umgebende Hülse 16 weist an ihren den Stirnflächen 11, 12 zugewandten Enden Abschnitte auf, die gegenüber dem Permanentmagneten 7 leicht überstehen. In der Praxis reichen wenige Zehntelmillimeter aus, um einen ausreichenden Überstand der Hülse 16 gegenüber dem Permanentmagneten 7 zu erreichen. Die überstehenden Abschnitte der Hülse 16 bewirken, dass sich diese überstehenden Abschnitte an die jeweiligen gegenüber liegenden Abschnitte der Stirnflächen 11, 12 anlegen, wenn der Trennkolben 4 seine jeweilige Endlage erreicht. Dadurch wird sichergestellt, dass die Permanentmagneten 7 und 8 bzw. 7 und 9 bei Erreichen der jeweiligen Endlage des Verschiebeweges des Trennkolbens 4 einander nicht berühren, d.h. insbesondere nicht schlagartig aufeinander treffen. Eine mechanische Beschädigung der Permanentmagneten 7, 8, 9 wird auf diese Weise wirksam verhindert.

Die im Ausführungsbeispiel dargestellten Permanentmagneten 7, 8, 9 sind aus Seltenerdewerkstoffen hergestellt, sodass die Permanentmagneten 7, 8, 9 sehr hohe magnetische Feldstärken bereits bei kleinen Abmaßen der Permanentmagnete gewährleisten. Auf diese Weise können extrem hohe Magnetkräfte für die erfindungsgemäße Abbremsung und Abpufferung des Trennkolbens 4 ausgenutzt werden.

### Bezugszeichenliste

- 1.: Kolbenstange
- 2.: Dämpfungseinrichtung
- 4.: Trennkolben
- 5.: erster Teilraum
- 6.: zweiter Teilraum
- 7.: Permanentmagnet
- 8.: Permanentmagnet
- 9.: Permanentmagnet
- 10.: Isolationselement
- 11.: Stirnfläche
- 12.: Stirnfläche
- 14.: Bohrung
- 15.: Bohrung
- 16.: Hülse
- 17.: Nut
- N: Nordpol
- S: Südpol

## Patentansprüche

1. Schwingungsdämpfer mit amplitudenabhängiger Dämpfung für Kraftfahrzeuge, umfassend ein Dämpferrohr, eine Kolbenstange (1), die im Dämpferrohr oszillierend bewegbar angeordnet ist und einen Dämpfungskolben trägt, der den Innenraum des Dämpferrohres in einen kolbenstangenseitigen und einen kolbenstangenfernen Arbeitsraum unterteilt, sowie eine hydraulisch parallel zu dem Dämpfungskolben angeordnete zweite Dämpfungseinrichtung (2), die einen Ausgleichsraum aufweist, der durch einen im Ausgleichsraum axial verschiebbar angeordneten Trennkolben (4) in einen ersten (5) und einen zweiten Teilraum (6) unterteilt ist, wobei der erste Teilraum (5) mit dem kolbenstangenseitigen und der zweite Teilraum (6) mit dem kolbenstangenfernen Arbeitsraum hydraulisch verbunden ist, **dadurch gekennzeichnet, dass** der Trennkolben (4) mindestens einen Permanentmagneten (7) aufweist und in jedem Endbereich des Ausgleichsraumes mindestens ein Permanentmagnet (8, 9) angeordnet ist, wobei die Permanentmagnete (7, 8, 9) derart zueinander angeordnet sind, dass in den Endlagen der axialen Verschiebbarkeit des Trennkolbens (4) Magnetpole gleicher Polung (N-N; S-S) einander zugewandt sind.

2. Schwingungsdämpfer nach Anspruch 1, **dadurch gekennzeichnet, dass** der mindestens eine Permanentmagnet (7) des Trennkolbens (4) durch ein lsolationselement (10) magnetisch von der Innenwandung des Ausgleichsraumes entkoppelt ist.

3. Schwingungsdämpfer nach Anspruch 1 oder 2, **dadurch gekennzeichnet, dass** der Ausgleichsraum zylindrisch ist.

4. Schwingungsdämpfer nach den voranstehenden Ansprüchen, **dadurch gekennzeichnet, dass** der Ausgleichsraum in einem Hohlraum der Kolbenstange (1) angeordnet ist.

5. Schwingungsdämpfer nach Anspruch 4, **dadurch gekennzeichnet, dass** jede den Ausgleichsraum begrenzende Stirnfläche (11, 12) des Hohlraums zumindest eine Ausnehmung aufweist, in die der mindestens eine Permanentmagnet (8, 9) eingesetzt ist.

6. Schwingungsdämpfer nach Anspruch 5, **dadurch gekennzeichnet, dass** in jedem Endbereich des Ausgleichsraumes nur ein einziger Permanentmagnet (8, 9) angeordnet ist.

7. Schwingungsdämpfer nach Anspruch 6, **dadurch gekennzeichnet, dass** die Permanentmagneten (8, 9) in die Ausnehmungen der Stirnflächen (11, 12) eingepresst sind und somit mittels Presssitz mit der Kolbenstange (1) verbunden sind.

8. Schwingungsdämpfer nach Anspruch 6 oder 7, **dadurch gekennzeichnet, dass** die hydraulische Verbindung zwischen dem kolbenstangenfernen Arbeitsraum und dem zweiten Teilraum (6) durch eine die Kolbenstange (1) und den Permanentmagneten (9) durchdringende Bohrung (14) gebildet ist.

9. Schwingungsdämpfer nach den voranstehenden Ansprüchen, **dadurch gekennzeichnet, dass** die hydraulische Verbindung zwischen dem kolbenstangenseitigen Arbeitsraum und dem ersten Teilraum (5) durch eine radiale Bohrung (15) in der Kolbenstange (1) gebildet ist.

10. Schwingungsdämpfer nach den voranstehenden Ansprüchen, **dadurch gekennzeichnet, dass** der Trennkolben (4) einen einzigen Permanentmagneten (7) aufweist, der von einem als Hülse (16) ausgebildeten Isolationselement (10) umgeben ist.

11. Schwingungsdämpfer nach Anspruch 10, **dadurch gekennzeichnet, dass** die Hülse (16) den Permanentmagneten (7) in axialer Richtung überragt, sodass die überragenden Abschnitte der Hülse (16) als Anschläge gegenüber den Stirnflächen (11, 12) wirken.

12. Schwingungsdämpfer nach Anspruch 10 oder 11, **dadurch gekennzeichnet, dass** die Hülse (16) an ihrem Außenumfang eine Nut (17) zur Auf nahme einer Dichtung aufweist.

## Claims

1. Vibration damper having amplitude-dependent damping for motor vehicles, comprising a damping tube, a piston rod (1), which is disposed in the damping tube so as to be able to move in an oscillating manner and supports a damping piston which divides the interior of the damping tube into a piston rod-side working chamber and a working chamber remote from the piston rod, and also comprising a second damping device (2) which is disposed hydraulically parallel to the damping piston and comprises an equalising chamber which is divided into a first (5) and a second (6) partial chamber by a separating piston (4) disposed so as to be able to be displaced axially in the equalising chamber, wherein the first partial chamber (5) is hydraulically connected to the piston rod-side working chamber and the second partial chamber (6) is hydraulically connected to the working chamber remote from the piston rod, **characterised in that** the separating piston (4) comprises at least one permanent magnet (7) and at least one permanent magnet (8, 9) is disposed in each end region of the equalising chamber, wherein the permanent magnets (7, 8, 9) are disposed with respect to one another such that magnetic poles having the same polarity (N-N; S-S) face each other in the end positions of the axial displacement capability of the separating piston (4).

2. Vibration damper as claimed in Claim 1, **characterised in that** the at least one permanent magnet (7) of the separating piston (4) is magnetically decoupled from the inner wall of the equalising chamber by an insulating element (10).

3. Vibration damper as claimed in Claim 1 or 2, **characterised in that** the equalising chamber is cylindrical.

4. Vibration damper as claimed in the preceding Claims, **characterised in that** the equalising chamber is disposed in a hollow chamber of the piston rod (1).

5. Vibration damper as claimed in Claim 4, **characterised in that** each end surface (11, 12) of the hollow chamber delimiting the equalising chamber comprises at least one recess, the at least one permanent magnet (8, 9) being inserted into the at least one recess.

6. Vibration damper as claimed in Claim 5, **characterised in that** only a single permanent magnet (8, 9) is disposed in each end region of the equalising chamber.

7. Vibration damper as claimed in Claim 6, **characterised in that** the permanent magnets (8, 9) are pressed into the recesses of the end surfaces (11, 12) and are thus connected to the piston rod (1) by means of a press-fit arrangement.

8. Vibration damper as claimed in Claim 6 or 7, **characterised in that** the hydraulic connection between the working chamber remote from the piston rod and the second partial chamber (6) is formed by a bore (14) penetrating the piston rod (1) and the permanent magnet (9).

9. Vibration damper as claimed in the preceding Claims, **characterised in that** the hydraulic connection between the piston rod-side working chamber and the first partial chamber (5) is formed by a radial bore (15) in the piston rod (1).

10. Vibration damper as claimed in the preceding Claims, **characterised in that** the separating piston (4) comprises a single permanent magnet (7) which is surrounded by an insulating element (10) formed as a sleeve (16).

11. Vibration damper as claimed in Claim 10, **characterised in that** the sleeve (16) protrudes beyond the permanent magnet (7) in the axial direction so that the protruding sections of the sleeve (16) act as stops with respect to the end surfaces (11, 12).

12. Vibration damper as claimed in Claim 10 or 11, **characterised in that** the sleeve (16) comprises on its outer periphery a groove (17) for receiving a seal.

## Revendications

1. Amortisseur de vibrations avec amortissement dépendant de l'amplitude pour poids lourds, comprenant un tube d'amortisseur, une tige de piston (1), qui est agencée pour pouvoir se déplacer de manière oscillante dans le tube d'amortisseur et qui porte un piston d'amortissement, qui divise l'espace intérieur du tube d'amortissement en un espace de travail côté tige de piston et un espace de travail opposé à la tige de piston, ainsi qu'un deuxième dispositif d'amortissement (2) hydraulique, agencé parallèlement au piston d'amortissement, qui présente un espace d'équilibration, qui est divisé par un piston de séparation (4) agencé de manière mobile axialement dans l'espace d'équilibration, en un premier espace partiel (5) et un deuxième espace partiel (6), où le premier espace partiel (5) est relié de manière hydraulique à l'espace de travail côté tige de piston et le deuxième espace partiel (6) est relié de manière hydraulique à l'espace de travail opposé à la tige de piston, **caractérisé en ce que** le piston de séparation (4) présente au moins un aimant permanent (7) et **en ce qu'**un aimant permanent (8, 9) est agencé à chaque extrémité de l'espace d'équilibration, où les aimants permanents (7, 8, 9) sont agencés l'un par rapport à l'autre de sorte que en position terminale de la mobilité axiale du piston de séparation (4), les pôles magnétiques de même polarité (N-N, S-S) sont tournés l'un vers l'autre.

2. Amortisseur de vibrations selon la revendication 1, **caractérisé en ce que** le au moins un aimant permanent (7) du piston de séparation (4) est découplé magnétiquement de la paroi interne de l'espace d'équilibration par un élément d'isolation (10).

3. Amortisseur de vibrations selon la revendication 1 ou 2, **caractérisé en ce que** l'espace d'équilibration est cylindrique.

4. Amortisseur de vibrations selon l'une quelconque des revendications précédentes, **caractérisé en ce que** l'espace d'équilibration est agencé dans un espace creux de la tige de piston (1).

5. Amortisseur de vibrations selon la revendication 4, **caractérisé en ce que** chacune des surfaces extérieures (11, 12) limitant l'espace d'équilibration présente au moins un creux, dans lequel est introduit le au moins un aimant permanent (8, 9).

6. Amortisseur de vibrations selon la revendication 5, **caractérisé en ce que** dans chaque zone terminale de l'espace d'équilibration, n'est agencé d'un seul aimant permanent (8, 9).

7. Amortisseur de vibrations selon la revendication 6, **caractérisé en ce que** les aimants permanents (8, 9) sont intégrés dans les creux des surfaces extérieures (11, 12) et ainsi, sont reliés par ajustement serré à la tige de piston (7).

8. Amortisseur de vibrations selon la revendication 6 ou 7, **caractérisé en ce que** la liaison hydraulique entre l'espace de travail opposé à la tige de piston et le deuxième espace partiel (6) est formé par un forage (14) traversant la tige de piston (1) et l'aimant permanent (9).

9. Amortisseur de vibrations selon les revendications précédentes, **caractérisé en ce que** la liaison hydraulique entre l'espace de travail côté tige de piston et le premier espace partiel (5) est formé par un forage radial (15) dans la tige de piston (1).

10. Amortisseur de vibrations selon les revendications précédentes, **caractérisé en ce que** le piston de séparation (4) présente un seul aimant permanent (7), qui est entouré d'un élément d'isolement (10) formant gaine.

11. Amortisseur de vibrations selon la revendication 10, **caractérisé en ce que** la gaine (16) de l'aimant permanent (7) dépasse en direction axiale, de sorte que le segment dépassant de la gaine (16) agit comme butée vis-à-vis des surfaces extérieures (11, 12).

12. Amortisseur de vibrations selon la revendication 10 ou 11, **caractérisé en ce que** la gaine (16) présente une rainure (17) pour la réception d'un joint sur sa périphérie.
